# EUROPEAN PATENT APPLICATION

(11) **EP 4 763 448 A1**
(43) Date of publication of application: **24.06.2026**
(21) Application number: 25223938.9
(22) Date of filing: 16.12.2025
(51) Int. Cl.: B26D 1/00, B26D 7/08, B26D 1/30, B41J 11/70, B65C 9/18, G01G 19/414, B26D 1/45

(54) **LABEL PRINTER AND ASSOCIATED LABEL CUTTER AND CUTTER BLADE**

(30) Priority: 18.12.2024 US 202463735669 P; 25.11.2025 US 202519400529
(71) Applicant: Illinois Tool Works Inc., Glenview IL 60025 (US)
(72) Inventor: KNOBLAUCH, Austin, Glenview, 60025 (US); REDMAN, Randall L., Glenview, 60025 (US); TAYLOR, Ian D., Glenview, 60025 (US); HOLMES, Robert Andrew, Glenview, 60025 (US)
(74) Representative: HGF

(57) **Abstract**

A label cutter includes a blade having a curved cutting edge configured and arranged to move towards a platen in order to cut a label material placed therebetween. The blade includes opposite first and second sides, wherein each of the first and second sides includes a groove or pocket for capturing adhesive. The label cutter may be incorporated into a label printer, such as a weighing scale that includes a label printhead.

## Description

### TECHNICAL FIELD

This application relates to a label printer and, more particularly, a label printer and associated cutter blade adapted for cutting label material, such as a linerless label material.

### BACKGROUND

In typical commercial food product scale applications the scale is used to weigh food products and determine prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

Such scales, as well as other devices, such as stand-alone printers, commonly output labels. As used herein, the term printer encompasses both devices that function solely or primarily as printers, as well as other devices that include a printer function but also include other functions in addition to printing, such as weighing scales that also print labels.

Labels are used for a large variety of purposes, for example, they are attached to packaging for commercial products or food products to indicate their contents, to machinery to indicate their model number, for pricing purposes and also for branding, to name a few. Labels can also be used for postage, to indicate the address for postal. Typically, labels are provided with an adhesive side that can be used to stick (i.e. adhere) to the target surface. A non-adhesive backing sheet or liner is commonly used to cover the adhesive side and separated when the adhesive label is to be stuck to the desired surface. Linerless labels are also known. Both label styles are provided in a continuous roll. The continuous roll is then cut to cut to length based on a customer's preference or based on the amount of details printer on the label. The customer has the flexibility to decide length where a die-cut roll of labels comes with a predefined length of every label.

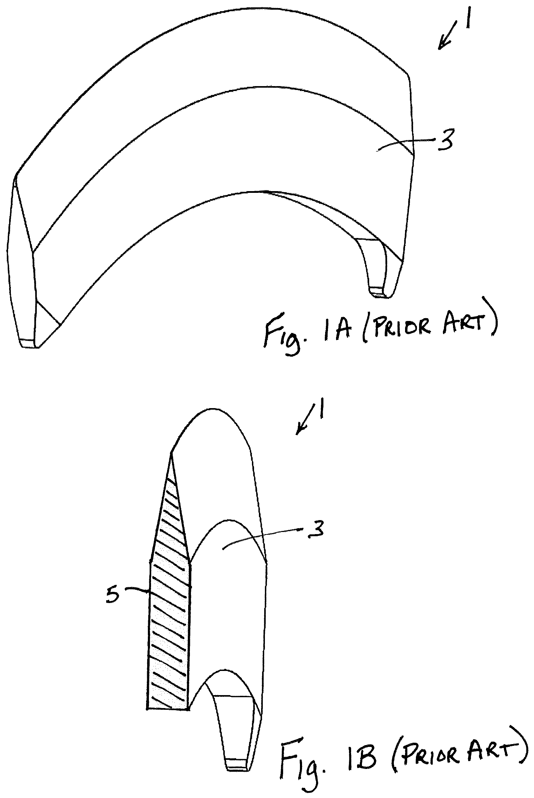

Various types of cutters have been used in the past for cutting of the continuous roll, such as a guillotine or scissors, or a cutting apparatus having a blade such as an industrial knife cutting machine. U.S. Patent No. 11,602,869, which is incorporated herein by reference, discloses a label cutter blade with a curved cutting edge. The previously used cutter blade 1 had smooth sides 3, 5 (see Figs. 1A-1B). As label stock is cut, over time adhesive begins to accumulate on the cutter blade. Once a certain amount of adhesive builds up, the adhesive begins to seep down the sides of the blade and becomes trapped between the blade and the two sheet metal plates which the blade runs between. When this adhesive becomes trapped, it reduces the free moving ability of the blade which can lead to inadequate or improper label cutting.

Accordingly, it would be desirable to provide a label device the reduces such adhesive accumulation issues.

### SUMMARY

In one aspect, a mechanism is provided in which the blade used to automatically cut label stock, primarily linerless stock, has grooves or pockets to help capture adhesive runoff and provide longer life/usage of the blade before cleaning of the blade or blade system is required. A metal curved cutter blade is captured between two metal plates, which act as guides. The blade is rolled back and forth under spring loading across a plastic cutting surface or platen. As the tip of the blade presses through the adhesive exposed side of the linerless label stock, there is a tendency for adhesive to remain on the blade's surface. Over time the adhesive will accumulate and begin to seep down the sides of the blade and runs into the grooves or pockets on the sides of the blade, which will capture the adhesive. This prevents the adhesive from becoming trapped between the blade and the metal guide plates.

In another aspect, a label cutter includes a blade having a curved cutting edge configured and arranged to move towards a platen in order to cut a label material placed therebetween. The blade includes opposite first and second sides, wherein each of the first and second sides includes a groove or pocket for capturing adhesive.

The details of one or more embodiments are set forth in the accompanying drawings and the description below. Other features, objects, and advantages will be apparent from the description and drawings, and from the claims.

### BRIEF DESCRIPTION OF THE DRAWINGS

Embodiments of the invention are further described hereinafter with reference to the accompanying drawings, in which:
Figs. 1A-1B show a prior art cutter blade;
Figs. 2-7 show an exemplary scale device;
Figs. 8A-8B show one embodiment of a cutter blade;
Figs. 9A-9B show another embodiment of a cutter blade;
Figs. 10A-10B show another embodiment of a cutter blade; and
Figs. 11A-11C show another embodiment of a cutter blade.

### DETAILED DESCRIPTION

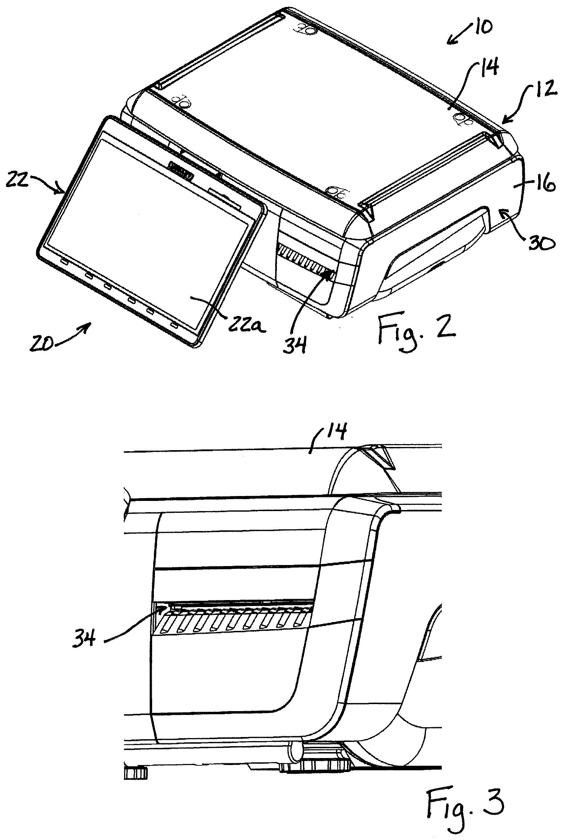

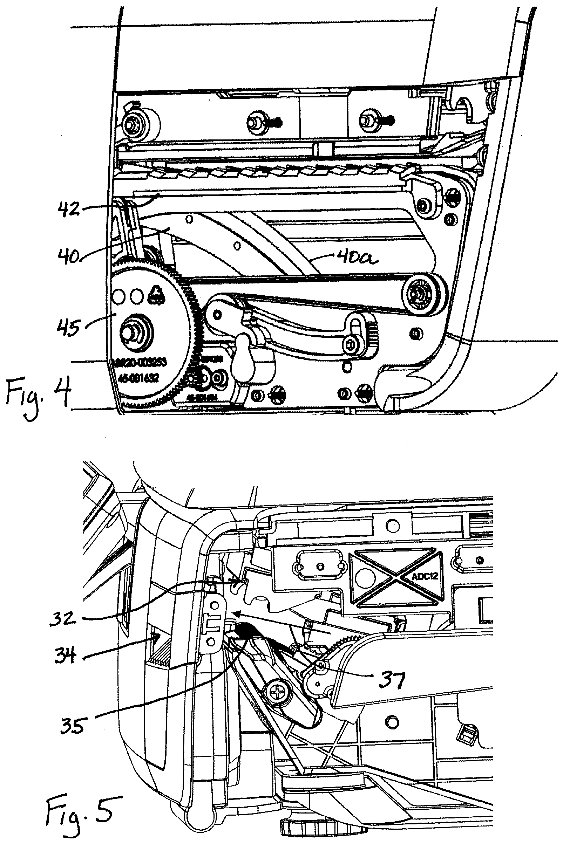

Referring to Figs. 2-7, a weighing scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a.

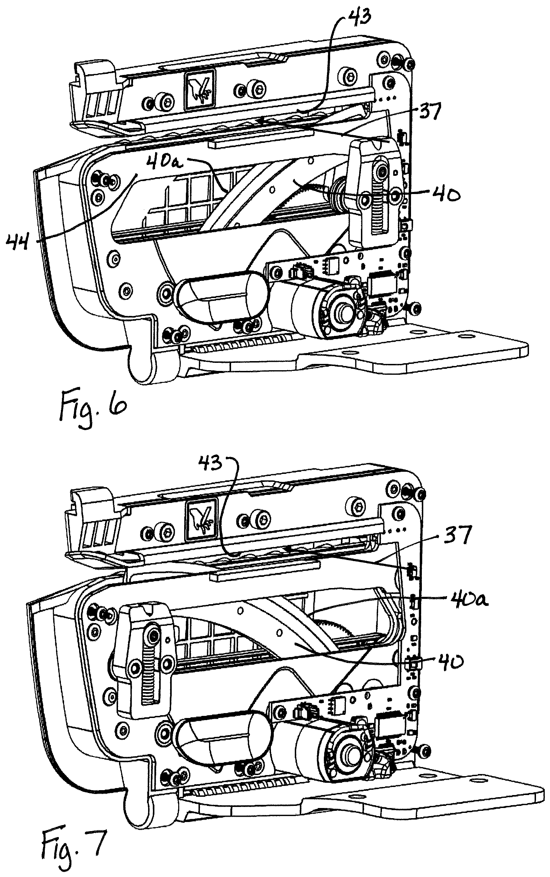

In embodiments, a side portion of the scale body includes a cassette station that receives a removable label stock cassette 30. A label printer (e.g., a printhead 32 and associated print roller 35) is located within the scale body along a label travel path 37 and may use any suitable printing technology for printing on labels of a label supply roll loaded in the cassette 30, which printed labels then exit the label exit slot 34 to be applied to products. A label cutter is provided and includes a cutter blade 40 with curved cutting edge 40a and a drive system 45 that moves a bearing along the underside of the cutter blade to move the cutter blade such that the cutting edge is progressively moved through a label stock passing along the label travel path 37 over the cutter blade to reach the label exit slot 34. The start position of the cutter blade before cutting is shown in Fig. 6, and the finish position of the cutter blade after cutting is shown in Fig. 7. The cutter blade 40 is captured between metal plates 42, 44 for stabilization during such movement. A platen member 43 against which the cutting edge 40a presses as it moves across the width of the label material is also shown.

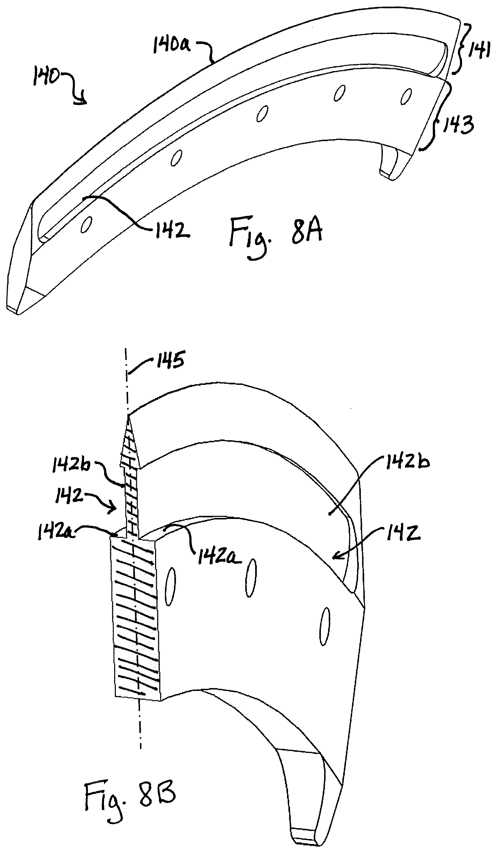

Referring now to Figs. 8A-8B, one embodiment of a cutter blade 140 is shown. The cutter blade includes a tapered portion 141 and a body portion 143. The opposed side surfaces of the tapered portion 141 join to define the blade cutting edge 140a. The opposed side surfaces of the body portion 143 may be generally planar and substantially parallel to each other. The cutter blade 140 includes inwardly recessed grooves or pockets 142 on both sides of the cutter blade and disposed below and along a majority of the length of the blade cutting edge 140a (e.g., along more than 60%, such as more than 70% or more than 80% of the length of the blade cutting edge). The grooves or pockets 142 may be located entirely on or the tapered portion 141 of the cutter blade, but variations are possible. The grooves or pockets 142 may be machined or cast into the cutter blade 140, and form outwardly extending ledges 142a that help capture and retain adhesive. Here, the ledges 142a run substantially ninety degrees relative to an inner wall surface 142b of the grooves or pockets and/or relative to a plane 145 in which the cutting edge 140a lies. In implementations, the ledges 142a may be located above the body portion 143 (e.g., between the body portion 143 and the cutting edge 141a) and/or may define the upper limit of the body portion 143 or regions of the body portion 143.

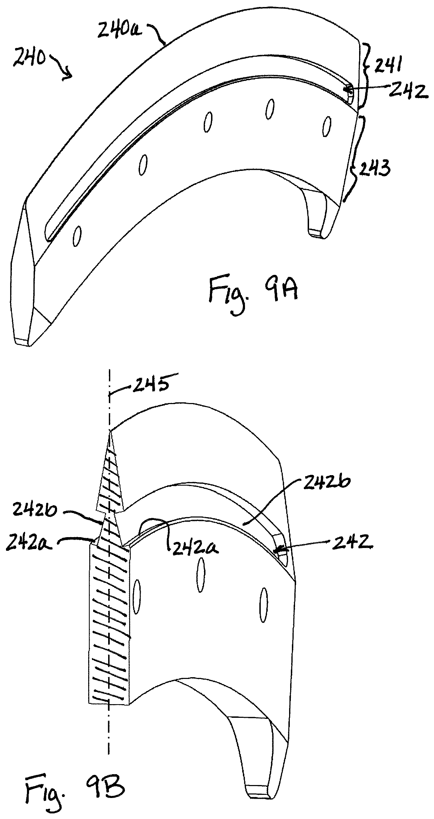

Figs. 9A-9B show another embodiment of a cutter blade 240 with a tapered portion 241 and a body portion 243, and that includes inwardly recessed grooves or pockets 242 on both sides of the cutter blade and disposed below and along a majority of the length of the blade cutting edge 240a (e.g., along more than 60%, such as more than 70% or more than 80% of the length of the blade cutting edge). The grooves or pockets 242 may be machined or cast into the cutter blade, and form ledges 242a that help capture and retain adhesive. The ledges 242a and inner wall surfaces 242b of the grooves or pockets may form a slight V-shape for better adhesive capture and retention (e.g., the ledges 242a include a directional component that is parallel to the plane 245 in which the cutting edge 240a lies and toward the cutting edge 240a). The ledges 242a may be located above the body portion 243, such as slightly into the tapered portion 241.

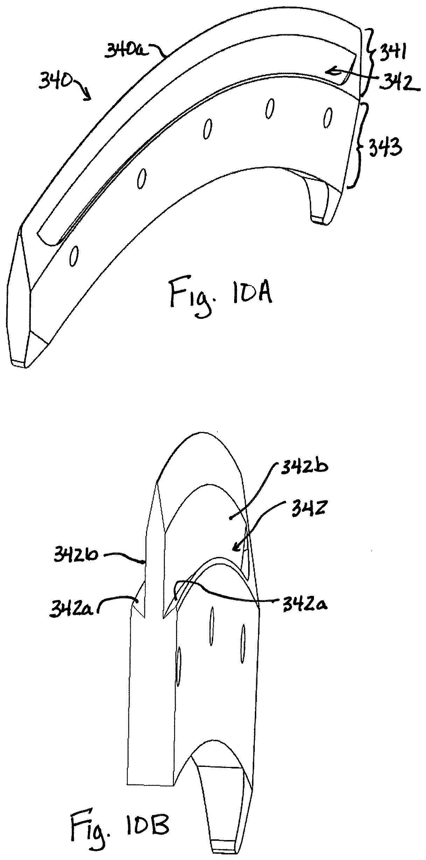

Figs. 10A-10B show another embodiment of a cutter blade 340 with a tapered portion 341 and a body portion 343, and that includes inwardly recessed grooves or pockets 342 on both sides of the cutter blade and disposed below and along a majority of the length of the blade cutting edge 340a (e.g., along more than 60%, such as more than 70% or more than 80% of the length of the blade cutting edge). The grooves or pockets 342 may be machined or cast into the cutter blade, and form ledges 342a that help capture and retain adhesive. The ledges 342a and inner wall surfaces 342b of the grooves or pockets may form a deeper V-shape, as compared to the case of cutter blade 240, for potentially better adhesive capture and retention.

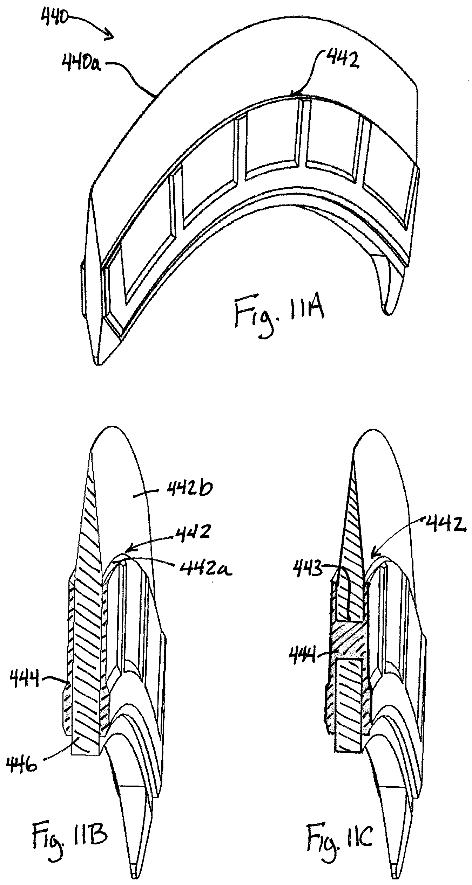

Figs. 11A-10C show another embodiment of a cutter blade 440 that includes inwardly recessed grooves or pockets 442 on both sides of the cutter blade and disposed below and along a majority of the length of the blade cutting edge 440a (e.g., along more than 60%, such as more than 70% or more than 80% of the length of the blade cutting edge). Here, the plastic also extends through one or more side-to-side openings 443 in the cutter blade. Here, the grooves or pockets 442 are formed in part by a plastic material 444 over-molded onto the metal portion 446 of the cutter blade, and form ledges 442a that help capture and retain adhesive. Here, the ledges 442a and inner wall surfaces 442b of the grooves or pockets form a V-shape for better adhesive capture and retention.

In the case of all cutter blade embodiments, once a certain amount of adhesive builds up, it begins to seep down the sides of the blade and will collect in the grooves or pockets, reducing the likelihood of adhesive becoming stuck between the blade and the metal guide plates 42 and 44.

Various aspects provided by the above exemplary embodiments include the following.

A1. A label cutter including a blade having a curved cutting edge, wherein the blade includes opposite first and second sides, wherein each of the first and second sides includes a groove or pocket for capturing adhesive.

A2. The label cutter of aspect A1, wherein the blade is configured and arranged for moving towards a platen in order to cut a label material placed between the blade and the platen.

A3. The label cutter of aspect A1 or A2, wherein each groove or pocket is disposed below and runs along a majority of a length of the curved cutting edge.

A4. The label cutter of any of aspects A1 to A3, wherein each groove or pocket runs along at least seventy percent of the length of the curved cutting edge.

A5. The label cutter of any of aspects A1 to A4, wherein each groove or pocket defines an outwardly extending adhesive capture ledge.

A6. The label cutter of any of aspects A1 to A5, wherein the blade comprises a tapered portion with opposed side surfaces that merge at the curved cutting edge, and a body portion with opposed side surfaces that are substantially planar and parallel to each other.

A7. The label cutter of any of aspects A1 to A6, wherein the adhesive capture ledges are located above and/or define an upper limit of at least regions of the body portion.

A8. The label cutter of any of aspects A1 to A7, where the adhesive capture ledges extend substantially perpendicular to a plane in which the curved cutting edge lies.

A9. The label cutter of any of aspects A1 to A8, wherein the adhesive capture ledges form a V-shape with a side surfaces of the grooves or pockets.

A10. The label cutter of any of aspects A1 to A9, wherein each adhesive capture ledge extends outwardly and upwardly toward the curved cutting edge.

A11. The label cutter of any of aspects A1 to A10, wherein each groove or pocket is machined or cast into the blade.

A12. The label cutter of any of aspects A1 to A11, wherein each groove or pocket is formed at least in part by a plastic material overmolded onto a metal portion of the blade.

A13. The label cutter of aspect A12, wherein the plastic material extends through at least one side-to-side through opening of the blade.

A14. A label printer includes a printhead, a label travel path past the printhead, and the label cutter of any of aspects A1 to A13 positioned below a portion of the label travel path and mounted for movement through the label travel path.

A15. The label printer of aspect A14, wherein the label printer is configured as a weighing scale with a weighing station.

It is to be clearly understood that the above description is intended by way of illustration and example only, is not intended to be taken by way of limitation, and that other changes and modifications are possible.

## Claims

1. A label cutter, comprising:
a blade having a curved cutting edge;
wherein the blade includes opposite first and second sides, wherein each of the first and second sides includes a groove or pocket for capturing adhesive.

2. The label cutter of claim 1, wherein the blade is configured and arranged for moving towards a platen in order to cut a label material placed between the blade and the platen.

3. The label cutter of claim 1, wherein each groove or pocket is disposed below and runs along a majority of a length of the curved cutting edge.

4. The label cutter of claim 3, wherein each groove or pocket runs along at least seventy percent of the length of the curved cutting edge.

5. The label cutter of claim 1, wherein each groove or pocket defines an outwardly extending adhesive capture ledge.

6. The label cutter of claim 5, wherein the blade comprises a tapered portion with opposed side surfaces that merge at the curved cutting edge, and a body portion with opposed side surfaces that are substantially planar and parallel to each other.

7. The label cutter of claim 6, wherein the adhesive capture ledges are located above and/or define an upper limit of at least regions of the body portion.

8. The label cutter of claim 5, where the adhesive capture ledges extend substantially perpendicular to a plane in which the curved cutting edge lies.

9. The label cutter of claim 5, wherein the adhesive capture ledges form a V-shape with a side surfaces of the grooves or pockets.

10. The label cutter of claim 5, wherein each adhesive capture ledge extends outwardly and upwardly toward the curved cutting edge.

11. The label cutter of claim 1, wherein each groove or pocket is machined or cast into the blade.

12. The label cutter of claim 1, wherein each groove or pocket is formed at least in part by a plastic material overmolded onto a metal portion of the blade.

13. The label cutter of claim 12, wherein the plastic material extends through at least one side-to-side through opening of the blade.

14. A label printer, comprising:
a printhead;
a label travel path past the printhead; and
the label cutter of claim 1 positioned below a portion of the label travel path and mounted for movement through the label travel path.

15. The label printer of claim 14, wherein the label printer is configured as a weighing scale with a weighing station.
